# EUROPEAN PATENT SPECIFICATION

(11) **EP 4 247 893 B1**
(45) Date of publication and mention of the grant of the patent: **14.10.2026**
(21) Application number: 21810374.5
(22) Date of filing: 18.11.2021
(51) Int. Cl.: C08L 67/02, C08L 67/06, C08L 67/07

(54) **POLYESTER COMPOSITION WITH IMPROVED IMPACT PROPERTIES**
POLYESTERZUSAMMENSETZUNG MIT VERBESSERTEN SCHLAGZÄHIGKEITSEIGENSCHAFTEN
COMPOSITIONS DE POLYESTER PRÉSENTANT DES PROPRIÉTÉS D'IMPACT AMÉLIORÉES

(30) Priority: 20.11.2020 EP 20208954
(43) Date of publication of application: 27.09.2023
(73) Proprietor: Furanix Technologies B.V., 1014 BV Amsterdam (NL)
(72) Inventor: ACQUASANTA, Francesco, 1014 BV AMSTERDAM (NL); DE BOER, Ele Louis, 1014 BV AMSTERDAM (NL)
(74) Representative: EP&C
(86) International application number: PCT/EP2021/082189
(87) International publication number: WO 2022/106560

(56) References cited:
- CN-A- 108 624 024
- CN-A- 108 659 482
- US-A1- 2019 202 977

## Description

The present invention relates to a polyester composition comprising a polyester comprising alkylene 2,5-furandicarboxylate units having improved impact properties, a process for producing such a polyester composition and an article comprising the respective polyester composition.

2,5-Furandicarboxylic acid (FDCA) is known in the art to be a highly promising building block for replacing petroleum-based monomers in the production of high performance polymers. In recent years FDCA and the plant-based polyester polyethylene 2,5-furandicarboxylate (PEF) have attracted a lot of attention. PEF is a recyclable plastic with superior performance properties compared to today's widely used plastics. These materials could significantly reduce the dependence on petroleum-based polymers and plastics, while at the same time allowing for a more sustainable management of global resources. Correspondingly, comprehensive research was conducted to arrive at a technology for producing FDCA and PEF in a commercially viable way.

FDCA is typically obtained by oxidation of molecules having furan moieties, e.g. 5-hydroxymethylfurfural (5-HMF) and the corresponding 5-HMF esters or 5-HMF ethers, that are typically obtained from plant-based sugars, e.g. by sugar dehydration. A broad variety of oxidation processes is known from the prior art, that comprises e.g. enzymatic or metal catalysed processes such as described in WO2010/132740 and WO2011/043660.

While a lot of research effort was directed at the efficient production of the monomer FDCA in the early days of the technology, researchers soon realized that arriving at efficient processes for producing high-performance polyesters from FDCA was at least as challenging. While FDCA is oftentimes considered a structural and functional analogue to terephthalic acid (TA), that is used in the production of the widely used polyester polyethylene terephthalate (PET), it became apparent that several established techniques known from the PET industry could not be easily adapted to produce high-performance polyesters from FDCA that meet the requirements of the relevant industries. Comprehensive prior art is available on processes for producing polyesters from FDCA focussing on different aspects of the technology, e.g. EP 3116932, EP 3116934, WO 2013/1209989 and US 2010/0174044.

Despite its beneficial properties, e.g. higher modulus and higher tensile strength, PEF typically exhibits a lower impact resistance and a lower ductility than PET, which is considered less favourable for several applications. Especially, the non-oriented regions in PEF products can sometimes exhibit less impact resistance than costumers, who normally use PET, may expect. It is known that the impact properties of PEF can be improved by different processes, e.g. after orientation during stretching. If treated correctly, PEF can even outperform PET for some impact criteria, such as energy absorption before fracture and in drop dart testing. However, there is a need to further improve the impact properties of PEF in order to optimize its performance for different applications, e.g. its performance during drop test of bottles and with respect to crack formation during unwinding and clamping of sheets prior to thermoforming. Improving the impact resistance would further increase the customer acceptance of this new material and potentially is an important way of enhancing the processability of PEF, e.g. for thermoforming applications.

The overarching objective of the present invention was to improve properties of alkylene 2,5-furandicarboxylate polyester compositions of the prior art.

Many mixtures of polymers have been described in the prior art. For example, CN108624024 aims to improve the performance properties of polycarbonate and teaches the use of a mixture of 55-80 parts by weight of polycarbonate, 15-38 parts by weight of polyethylene furandicarboxylate, 1-5 parts by weight of a toughening agent, 0.5-2 parts by weight of antioxidant and 0.5 to 2 parts by weight of auxiliary components. CN108659482 aims to improve the performance of a polylactic alloy in 3D printing and teaches the use of an alloy comprising 62-90 %wt polylactic acid, 4-30 %wt polybutylene succinate, 1-5 %wt toughening agent, 0.1-1.5 %wt nucleating agent and 0.5-2 %wt auxiliary agent. However, neither document contains information on how to improve the properties of polyesters comprising alkylene 2,5-furandicarboxylate polyester compositions.

Thus, the primary objective of the present invention was to provide a polyester composition comprising a polyester comprising alkylene 2,5-furandicarboxylate units that exhibits improved mechanical properties, in particular an improved impact resistance.

It was an additional objective of the present invention to provide a polyester composition with improved impact properties and good colour properties and has reduced unwanted coloration during subsequent processing of the polyester composition.

Furthermore, it was an objective of the present invention to provide a process for effectively producing such beneficial polyester compositions.

It was a further alternative goal of the present invention to achieve the above objectives without undesired deterioration of the processability of the polyester composition or adversely affecting the potential of obtaining polyesters with high molecular weights by subsequent solid state polymerization.

As indicated above, the skilled person is in principle aware of processes for increasing the impact properties of unmodified PEF, e.g. by orientation of the material. However, these processes are only applicable to articles that require orientation during manufacturing (i.e. bottles, other ISBM containers, biaxially oriented films), often are considered to be time and resource consuming and are not well suited for several applications.

The document WO 2020/013694 discloses a method for fabricating a container, preferably a bottle, comprising poly(ethylene 2,5-furandicarboxylate) with an excellent shrinkage behaviour. In the context of this document, it is suggested that the poly(ethylene 2,5-furandicarboxylate) that is used for manufacturing the containers may also comprise additives, such as stabilizers, colorants and impact modifies.

Impact modifies are in principal known to the skilled person, e.g. from PET technology, wherein a broad variety of different compounds is known to improve the impact properties of different resins. Impact modifiers typically are polymer materials having elastomer-like characteristics.

However, the inventors of the present invention found, that several impact modifiers that are typically used for other polyesters, are not suitable for sufficiently increasing the impact properties of PEF. Without wishing to be bound by theory, the inventors assume that this is due to the different chemical properties of the 2,5-furandicarboxylate units and the resulting polyester, respectively.

The experiments conducted by the inventors revealed that a specific type of impact modifier is capable of sufficiently increasing the impact properties of PEF. The inventors of the present invention found that a polyester composition comprising a polyester comprising alkylene 2,5-furandicarboxylate units with excellent impact properties can be obtained if core shell impact modifiers are used of the MBS-type core shell impact modifiers i.e. impact modifiers having a core comprising a butadiene-styrene copolymer and a shell comprising a methyl methacrylate based polymer or copolymer.

Furthermore, the inventors observed that certain core shell impact modifiers of the MBS-type also have further advantages. In particular, the inventors found that the addition of specific core shell impact modifiers of the MBS-type to a polyester comprising alkylene 2,5-furandicarboxylate units can prevent adversely effect the processability of the resulting polyester composition. More precisely, the inventors realized that certain core shell impact modifiers of the MBS-type can reduce unwanted coloration of the polyester composition during crystallization and/or drying of the polyester composition leading to a coloured product e.g. by resulting in a mostly yellow resin.

While the coloration of the resin is not necessarily unfavourable for all applications, e.g. for applications that feature a coating of the article in the final product anyway, the coloration can be unfavourable for some applications.

Based on this surprising discovery of a problem that, to the knowledge of the inventors does not occur in PET, the inventors conducted a thorough study in order to identify suitable parameters that set apart those core shell impact modifiers of the MBS-type that prevent causing unwanted coloration in subsequent processing step when added to PEF resin from those that unfavourably cause no unwanted coloration. Based on the experiments, it was found that a specific subset of core shell impact modifiers of the MBS-type can be identified to be especially preferred.

Hereinafter, the subject-matter of the invention is discussed in more detail including preferred embodiments. It is particularly preferred to combine two or more preferred embodiments to obtain an especially preferred embodiment.

The present invention relates to a polyester composition comprising a polyester comprising alkylene 2,5-furandicarboxylate units and a first impact modifier selected from the group consisting of core shell impact modifiers having a core comprising a butadiene-styrene copolymer and a shell comprising a methyl methacrylate based polymer or copolymer which polyester composition comprises of from 75 to 99 % by weight of the polyester comprising alkylene 2,5-furandicarboxylate units. Additional compounds of the polyester composition can be a second impact modifier, poly(ethylene terephthalate), recycled poly(ethylene terephthalate), polyethylene terephthalate glycol and additives which improve hydrolytic stability which are also be referred to as anti-hydrolysis additives. Preferably, the polyester composition is free from polycarbonate and/or poly lactic acid. Most preferably, the polyester composition consists of a polyester comprising alkylene 2,5-furandicarboxylate units and one or more impact modifiers preferably selected from the group of first and second impact modifiers described herein and further optionally one or more compounds selected from the group consisting of poly(ethylene terephthalate), recycled poly(ethylene terephthalate), polyethylene terephthalate glycol and additives which improve hydrolytic stability.

The polyester composition of the present invention comprises one or more polyesters comprising alkylene 2,5-furandicarboxylate units. In accordance with the understanding of the skilled person, the polyester comprising alkylene 2,5-furandicarboxylate units can also be a copolyester.

If the polyester comprising alkylene 2,5-furandicarboxylate units is a copolyester, it can typically be obtained by including more than one type of diacid and/or diol in the starting mixture. It is particularly preferred to use ethylene glycol as a diol, as the resulting polyester typically exhibits excellent properties, in particular with respect to the O₂ and CO₂ barrier properties.

As discussed, prior art processes for producing a polyester comprising alkylene 2,5-furandicarboxylate units typically comprise at least two distinct steps, i.e. the esterification and the polycondensation, wherein some processes also include additional intermediate steps like pre-polycondensation and/or subsequent processing steps like granulation, crystallization and/or solid state polymerization of the obtained resin. During esterification the diacids are reacted with diols under esterification conditions. Under these conditions, a part of the free carboxyl groups reacts with a part of the free hydroxyl groups to form an ester bond and water. Therefore, a mixture is produced that - depending on the concentration of the starting materials - comprises monomeric diesters and monoesters of the diacid with the diol, e.g. hydroxyalkyl esters, as well as water, residual free diacid and low molecular oligomers of these compounds.

The composition obtained in the esterification step is subsequently subjected to polycondensation conditions at elevated temperature and reduced pressure in order to obtain the final polyester. The polycondensation is typically conducted in the presence of a polycondensation catalyst that usually is a metal compound.

Optionally, a pre-polycondensation step may be used between the esterification step and the polycondensation step. The pre-polycondensation step is typically conducted at a pressure lower than that use in esterification and can be used to remove the most volatile components, such as free diol and other low molecular weight compounds, before reducing the pressure even further to begin the polycondensation process.

A polyester composition is preferred wherein the polyester comprises ethylene 2,5-furandicarboxylate units wherein the polyester preferably is polyethylene 2,5-furandicarboxylate. The polyester preferably is prepared solely from the monomers monoethylene glycol and 2,5-furandicarboxylic and/or an ester thereof. The polyester preferably consists of residues of the monomers monoethylene glycol and furandicarboxylic acid and/or an ester thereof. Such polyester can contain a limited amount of residue of diethylene glycol and oligomers of monoethylene glycol monomer. The polyethylene-2,5-furandicarboxylate has preferably a weight average molecular weight in the range of 40,000 to 150,000, more preferably from 50,000 to 120,000, more preferably from 55,000 to 100,000.

The polyester composition of the present invention comprises a first impact modifier that is selected from the group consisting of core shell impact modifiers having a core comprising a butadiene-styrene copolymer and a shell comprising a methyl methacrylate polymer or copolymer.

Correspondingly, from the broad variety of potential impact modifiers that are known in the art for different polymers, in the polyester composition of the present invention only a specific species of the specific subclass of core shell impact modifiers is employed as a first impact modifier.

Core shell impact modifiers are known to the skilled person and consist of a rubbery core that typically comprises about 40 to 80 % by weight of the impact modifier and a rigid/glassy shell made of grafted and/or non-grafted rigid polymer.

The first impact modifier that is used in the polyester composition of the present invention has a core comprising a butadiene-styrene copolymer. In accordance with the nomenclature used by the skilled person, the respective copolymer, that is sometimes also labelled styrene-butadiene rubber, describes a family of copolymers derived from the two monomers styrene and butadiene that are typically polymerized together either from solution or from an emulsion.

The first impact modifier that is employed in polyester compositions of the present invention has a shell that comprises a methyl methacrylate based polymer or copolymer that forms the rigid shell and can be grafted or non-grafted wherein it is especially preferred that the methyl methacrylate based polymer or copolymer is grafted to the rubbery core.

In accordance with the understanding of the skilled person, the methyl methacrylate based polymer, that preferably is polymethyl methacrylate when grafted to the butadiene-styrene copolymer of the core, can form a non-random copolymer comprising the three different building blocks derived from the methyl methacrylate, the styrene and the butadiene. For specific embodiments, it is preferred that the methyl methacrylate based copolymer that constitutes the shell of the first impact modifier is a styrene and methyl methacrylate copolymer.

In other words, the first impact modifier that is used in the polyester composition of the present invention typically comprises one or more polymeric materials, wherein at least one of the polymeric materials is derived from butadiene and styrene and wherein at least one of the polymeric materials is derived from methyl methacrylate. Despite the rather complex structural description of the first impact modifiers that are comprised by the polyester composition of the present invention, the skilled person typically refers to this group of impact modifiers as MBS core shell impact modifiers or MBS-type core shell impact modifier, respectively. Therefore, the above description is in line with the understanding of the skilled person.

The inventors of the present invention found that specific MBS-type core shell impact modifiers when combined with alkylene 2,5-furandicarboxylate can prevent unwanted coloration during drying and/or crystallization of the polyester compositions of the present invention.

By means of a comprehensive analysis of the different materials and their effect on coloration, the inventors surprisingly found suitable characteristics to define whether the first impact modifier will not have a detrimental effect on the processability of the polyester composition with respect to the coloration in subsequent processing steps.

Samples of the first impact modifiers were analysed by ATR-FTIR which technique allows the analysis of solid samples without further preparation and is well known to the skilled person. In the resulting spectra, the peaks that are associated with the different units along the polymer chain, i.e. the units derived from styrene, butadiene and methyl methacrylate can be identified.

The inventors found that the different core shell impact modifiers of the MBS-type can be distinguished from each other based on the ratio of these units to each other. It was found that unwanted coloration can be reduced if the ratio of units that are derived from butadiene to those derive from methyl methacrylate exceeds a certain value. Insofar, the inventors found that unwanted coloration can be reduced if the ratio of the maximum absorbance in the range 951 to 981 cm-1 and the maximum absorbance in the range of 1716 to 1746 cm-1 as measured by ATR FTIR is zero or more.

Therefore, a polyester composition of the present invention is preferred wherein the first impact modifier has a (B-M)/B ratio of 0 or more, preferably in the range of 0 to 0.3, more preferably in the range of 0 to 0.2, most preferably in the range of 0 to 0.1, wherein B is the maximum absorbance in the range of 951-981 cm-1 and M is the maximum absorbance in the range of 1716-1746 cm-1 as measured by ATR-FTIR. Herein, ATR-FTIR measurements should preferably be conducted as described below in the examples. The inventors found this parameter to be a convenient and consistent measure for reducing unwanted coloration that can easily be determined by the skilled person using routine experiments.

Furthermore, it was observed, that those impact modifiers, that did not lead to an unwanted coloration during subsequent drying and/or crystallizing steps, did not exhibit an endotherm peak of more than 0.2 J/g s in the range between 0 and 40 °C, when analysed for the thermal behaviour in the DSC measurement. Without wishing to be bound by theory, the inventors suspect that this observation is closely linked to the results obtained from the ATR-FTIR measurements. Thus, a polyester composition of the present invention is preferred, wherein the DSC curve of the first impact modifier is free of any endotherm peak of more than 0.2 J/g, preferably more than 0.4 J/g, most preferably more than 0.6 J/g, in the range between 0 and 40 °C. Herein, DSC measurements should preferably be conducted as described below in the examples.

Furthermore, the inventors found, that unwanted coloration during subsequent processing steps did not occur for core shell impact modifiers of the MBS-type that did not comprise relatively high amounts of metals and in particular did not comprise even traces of iron. Based on these results the inventors conclude, that good processability of the polyester compositions according to the invention can be obtained, if the amount of metals in the impact modifier is minimized. Correspondingly, a polyester composition of the present invention is preferred, wherein the first impact modifier comprises less than 800 ppm, preferably less than 600 ppm, by weight of metals with respect to the weight of the first impact modifier, calculated as the metal per se, wherein the at least one first impact modifier preferably comprises less than 0.5 ppm by weight of iron with respect to the weight of the first impact modifier, calculated as the metal per se.

When studying the effects of the addition of the first impact modifier, the inventors found that especially good impact properties for the polyester composition were obtained if the first impact modifier was combined with another impact modifier that is selected from the group consisting of so-called reactive impact modifiers. By using this combination, it was surprisingly possible to further enhance the impact properties of the polyester composition of the present invention although the respective impact modifiers themselves, when added as isolated impact modifiers, did not show a notable effect on the impact properties.

Reactive impact modifiers that may be used include ethylene-maleic anhydride copolymers, ethylene-alkyl (meth)acrylate-maleic anhydride copolymers, ethylene-alkyl (meth)acrylate-glycidyl (meth)acrylate copolymers, and the like.

Surprisingly, it was found, that the processability with respect to unwanted coloration during subsequent drying and/or crystallization steps remained good in the presence of reactive impact modifiers as long as the preferred first impact modifiers were selected as defined above.

Especially preferred is a polyester composition of the present invention, wherein the polyester composition comprises a second impact modifier selected from the group consisting of reactive ethylene copolymers, preferably selected from the group consisting of ethylene-alkyl acrylate-glycidyl methacrylate terpolymers, preferably ethylene-methyl acrylate-glycidyl methacrylate terpolymers.

The inventors were able to identify specific recipes for polyester compositions according to the invention that comprise specific amounts of the first and second impact modifier and show a particular good improvement of impact properties. Preferred is a polyester composition of the present invention, wherein the combined amount of first impact modifiers in the polyester composition is in the range of 1 to 25 %, preferably in the range of 3 to 20 %, more preferably in the range of 8 to 16 %, by weight with respect to the weight of the polyester composition and/or wherein the combined amount of second impact modifiers in the polyester composition is in the range of 0.5 to 10 %, preferably in the range of 1 to 8 %, by weight with respect to the weight of the polyester composition, and/or wherein the combined amount of polyester in the polyester composition is in the range of 75 to 99 %, preferably in the range of 80 to 95 %, by weight with respect to the weight of the polyester composition. It was found that the above-defined amounts of impact modifiers are especially preferred with respect to cost-efficiency, as a favourable increase of impact properties can be achieved without increasing the cost of the polyester compositions too much, as impact modifiers are often more expensive than the polyesters. As a synergistic advantage offered by the polyester compositions of the present invention it was found, that comparably high amounts of impact modifier can be included without decreasing the elastic modulus below 2000 MPa, i.e. a threshold below which polyester compositions are sometimes considered not suitable for certain applications. This is due to the relatively high elastic modulus of the unmodified PEF.

It was found to be a particular benefit of the present invention that despite the necessary compounding step, polyester compositions of the present invention can be obtained with high molecular weight. This makes them particular suitable for high-value applications. Additionally, if the preferred first impact modifiers are used, it is an especially beneficial aspect that the polyester composition of the present invention can be subjected to subsequent solid state polymerization conditions for increasing the molecular weight of the polyester even further, without resulting in unwanted coloration.

Preferred is a polyester composition according to the invention, wherein the polyester has a weight average molecular weight of 60 kg/mol or more, preferably 80 kg/mol or more. Herein, the weight average molecular weight should preferably be determined as described below in the examples.

The inventors found that by matching the refractive index of the first impact modifier to the refractive index of the polyester comprising alkylene 2,5-furandicarboxylate units, the scattering of light in the resulting polyester composition surprisingly can be minimized, thereby maximizing transmission in the polyester composition, that is particular preferred for all applications, where transparent materials are required. Based on experimental data, the refractive index of PEF was found to be about 1.566. Therefore, a polyester composition of the present invention is preferred wherein the refractive index of the first impact modifier and/or the second impact modifier is in the range of 1.56 to 1.57, preferably in the range of 1.564 to 1.568.

The invention also relates to a process for producing a polyester composition according to the invention, which process comprises the steps a) providing or producing a starting polyester comprising alkylene 2,5-furandicarboxylate units, and b) mixing the starting polyester with a first impact modifier selected from the group consisting of core shell impact modifiers, having a core comprising a butadiene-styrene copolymer and a shell comprising a methyl methacrylate based polymer or copolymer, and optionally with a second impact modifier, and compounding the obtained mixture in an extrusion device.

According to the process of the present invention the starting polyester comprising alkylene 2,5-furandicarboxylate units can be provided, e.g. bought from a supplier, or produced.

Preferably, the starting polyester is obtained by subjecting a starting mixture comprising 2,5-furandicarboxylic acid and an aliphatic diol, preferably an aliphatic diol comprising 2 to 8 carbon atoms, to esterification conditions to produce an ester composition and by subsequently subjecting said ester composition to polycondensation conditions.

In the process of the present invention, the starting polyester obtained in step a) is mixed with the first impact modifier, and optionally with a second impact modifier, wherein the obtained mixture is subsequently compounded in an extrusion device.

The process of the present invention beneficially results in a polyester composition according to the invention, that exhibits excellent impact properties, wherein the process of the present invention is particularly easy to conduct and does not require the usage of hazardous substances.

As stated above, subsequent processing steps can be added to the process of the present invention. Using this process steps, the physical-chemical properties of the polyester composition can be modified to match the needs of the desired application.

Preferred is a process of the present invention, further comprising the steps c) crystallizing the polyester composition obtained in step b), and/or d) drying the polyester composition obtained in step b) or c), and/or e) subjecting the polyester composition obtained in step b) or c) or d) to solid state polymerization conditions for increasing the weight average molecular weight.

If the preferred first impact modifiers as defined above are used in the process of the present invention, the mechanical properties of the polyester composition can be improved without detrimental effect on the colour of the polyester composition.

The steps c), d) and e) are known to the skilled person from the PET technology and the skilled person is typically able to adjust the process parameters of these steps according to its needs. However, the inventors identified specific process parameters that were found to be particularly beneficial for the process of the present invention, i.e. employing a specific first impact modifier.

A process according to the invention is preferred wherein the crystallization of the polyester composition in step c) is conducted under air or nitrogen, preferably at a temperature in the range of 100 to 200 °C, more preferably in the range of 120 to 180 °C, most preferably in the range of 140 to 160°C, wherein the crystallizing is preferably conducted for a time in the rage of 1 to 10 hours, preferably 2 to 6 hours, and/or wherein the drying of the polyester composition in step d) is conducted under vacuum, dry air or dry nitrogen, preferably at a temperature in the range of 100 to 200 °C, more preferably in the range of 120 to 180 °C, most preferably in the range of 140 to 160 °C, wherein the drying is preferably conducted for a time in the rage of 2 to 24 hours, preferably 4 to 16 hours, more preferably 6 to 12 hours. Especially preferred is a process according to the invention, wherein the drying of the polyester composition in step d) is conducted for a time in the range of 6 to 9 hours under dry air at elevated temperatures.

Likewise, a process according to the invention is preferred, wherein the solid state polymerization is conducted at an elevated temperature in the range of Tm - 80 °C to Tm - 20 °C, preferably Tm - 60 °C to Tm - 25 °C, more preferably Tm - 60 °C to Tm - 30 °C, wherein Tm is the melting point of the polyester comprising alkylene 2,5-furandicarboxylate units in °C, wherein the solid state polymerization is preferably conducted at an elevated temperature in the range of 160 to 240 °C, more preferably 170 to 220 °C, most preferably 180 to 210 °C, and/or wherein the solid state polymerization is conducted under inert gas atmosphere, preferably nitrogen, helium, neon or argon atmosphere.

With respect to the processability of the polyester composition obtainable with the process according to the present invention, the inventors found that the observed change in the weight average molecular weight of the polyester composition can beneficially be used to optimize the process of the present invention. In particular, the inventors found that the process parameters, in particular the amount of first impact modifier and the temperature during compounding, should be optimized so that the absolute reduction in weight average molecular weight of the polyester composition does not exceed a specific threshold, as this allows the production of a polyester composition, that exhibits favourable properties for further processing. Therefore, a process of the present invention is preferred, wherein the absolute reduction in weight average molecular weight of the polyester composition comprising the polyester comprising alkylene 2,5-furandicarboxylate units compared to the starting polyester comprising alkylene 2,5-furandicarboxylate units is less than 40 kg/mol, preferably less than 30 kg/mol.

As an alternative to adjusting the process parameters of the process of the present invention, the inventors found that a solid state polymerization step as defined above can be included, if the absolute reduction in weight average molecular weight exceeds the respective threshold and/or the skilled person wants to restore the initial weight average molecular weight of the polyester.

Having tested the processability of the polyester compositions that are produced with a process according to invention with respect to the mechanical properties and the processability for typical applications, the inventors found that it would be preferred if the relative increase in impact strength would exceed a certain threshold. Correspondingly, the inventors derived the teaching that it is preferred that the process according to the invention is set up and controlled in a way that at least a specific relative increase of impact strength is obtained. In view of this teaching, a process according to the present invention is preferred, wherein the ratio of the Charpy notched impact strength of the polyester composition divided by the Charpy notched impact strength of starting polyester is 1.5 or more, preferably 2 or more, more preferably 3 or more, most preferably 5 or more, and/or wherein the ratio of the Charpy unnotched impact strength of the polyester composition divided by the Charpy unnotched impact strength of starting polyester is 3 or more, preferably 4 or more, more preferably 6 or more, most preferably 10 or more.

In view of the above, the skilled person understands that the present invention also relates to an article, preferably a plastic article, comprising the polyester composition of the present invention wherein the article is preferably obtained or obtainable by injection molding or extrusion of the polyester composition of the present invention.

The respective plastic articles of the present invention are made from the polyester composition of the present invention. Due to the excellent processability of the polyester composition of the present invention, the articles of the present invention are particularly easy to produce with a consistent quality and typically exhibit excellent mechanical properties in particular a high impact strength, themselves.

The figures show:
- Fig. 1:: The ATR-FTIR spectra of a first set of MBS-type core shell impact modifiers;
- Fig. 2:: The ATR-FTIR spectra of a second set of MBS-type core shell impact modifiers;
- Fig. 3:: The DSC curve of four different MBS-type core shell impact modifiers; and
- Fig. 4:: Enlarged section of the DSC of Fig. 3.

Hereinafter, the invention is described in more detail using experiments.

### Examples

### Measurements

### GPC-Measurements:

The weight average molecular weight was determined through the use of gel permeation chromatography (GPC). GPC measurement was performed at 35 °C using two PSS PFG linear M (7 µm, 8x300 mm) columns with precolumn. Hexafluorisopropanol with 0.05 M potassiumtrifluoroacetate was used as eluent. Flow rate was set to 1.0 mL/min, injection volume was 50 µL and the run time was 50 min. The calibration is performed using polymethylmethacrylate standards.

### Impact strength:

Impact strength was tested according to ISO179 1eU (unnotched, November 2011) and ISO179 1eA (notched, November 2011) on 80x10x4 mm³ samples or, in analogy to ISO 179, with smaller samples of 50x6x4 mm³, respectively.

### Tensile properties:

The tensile E-modulus and tensile stress at yield as well as extension at break and tensile stress at break were measured according to ISO 527 (June 2012).

### ATR-FTIR

ATR-FTIR measurements were conducted using a ThermoFisher Scientific Nicolet iS5 FTIR Spectrometer provided with a diamond ATR plate.

### DSC:

DSC measurements were conducted in accordance with ISO11357-3 (July 2018), wherein a temperature scan between -60 °C and 260 °C at a rate of 10 °C/min was used.

### Optical measurements:

Y transmission was measured on 1 mm plaques using an Ultrascan UV VIS.

### Metal content:

Metal content was analyzed by means of ICP-OES using a PerkinElmer Avio200 and the software Syngistix.

### Materials

### Polyesters:

In the experiments, different polyesters were employed as components of the polyester compositions.

Different polyesters comprising alkylene 2,5-furandicarboxylate units were used, labelled PEF1, PEF2, PEF3, PEF4 and PEF5, respectively. These polyesters consist of polyethylene 2,5-furandicarboxylate produced in different runs from 2,5-furandicarboxylic acid and ethylene glycol by subjecting the starting materials to esterification conditions and subsequently subjecting the obtained ester composition to polycondensation conditions for obtaining the polyesters. PEF1, PEF2, PEF3, PEF4 and PEF5 have an intrinsic viscosity of 0.86 dL/g, 0.65 dL/g, 0.92 dL/g, 0.86 dL/g and 0.91 dL/g, respectively. While PEF1, PEF3, PEF4 and PEF5 were typically employed as granules, the lower IV polyester PEF2 was used only in powdered form.

For comparison, polyethylene terephthalate was used as well, labelled PET1. PET1 was a typical polyethylene terephthalate obtainable from Equipolymers (milled and dried).

### Impact Modifier:

In the experiments, different impact modifiers were employed as components of the polyester compositions.

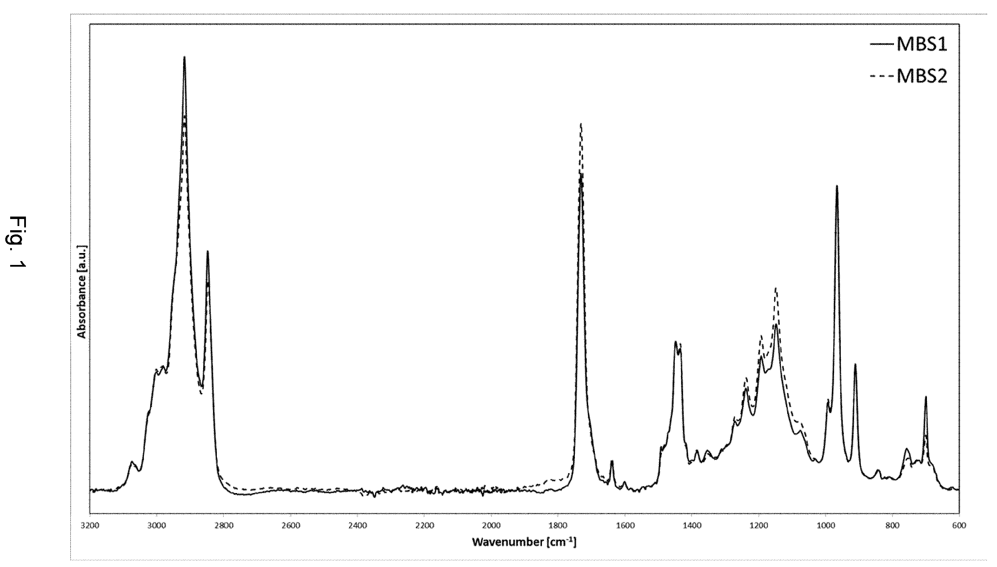

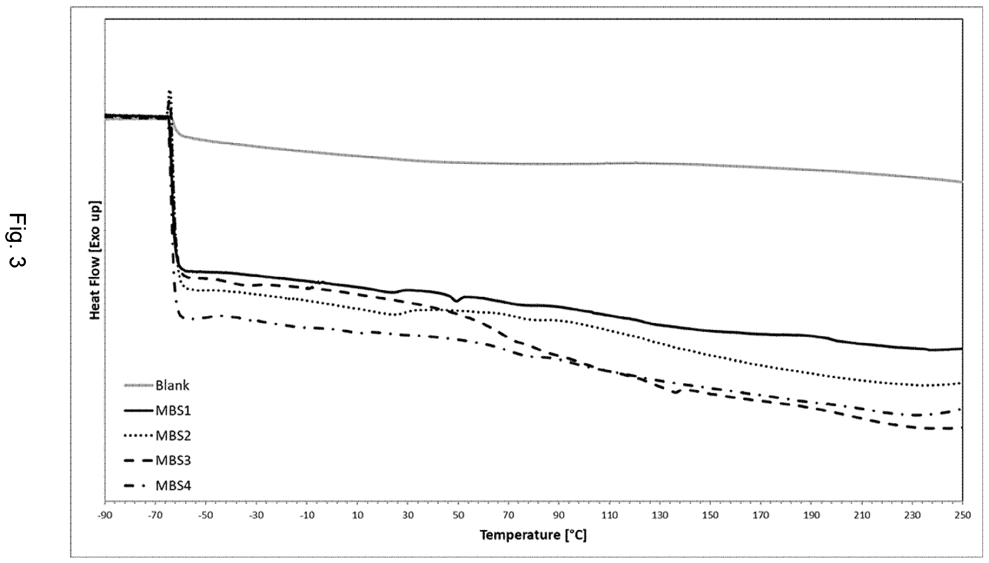

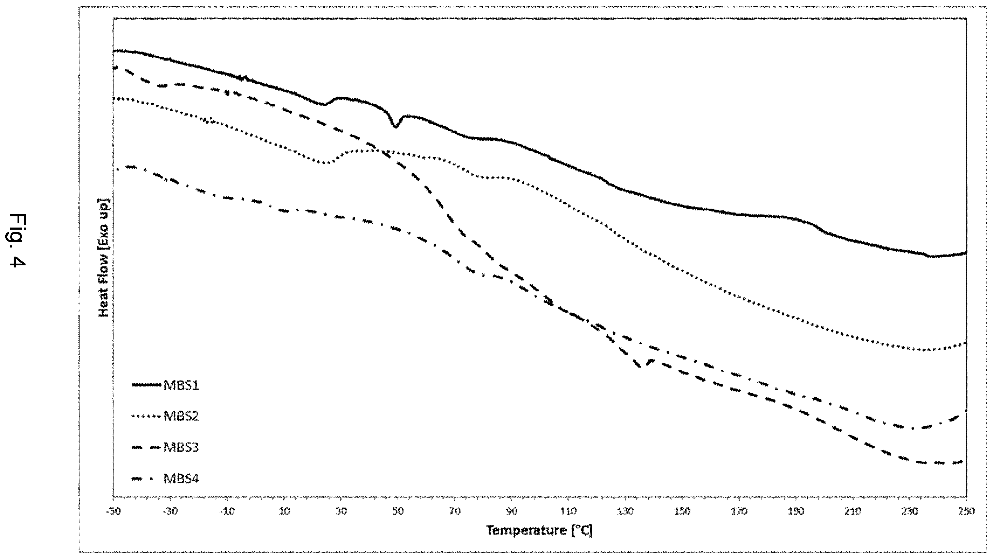

MBS1 and MBS2 are core shell impact modifiers of the MBS-type, available under the trade name Clearstrength E920 and E950. The ATR-FTIR spectra of these impact modifiers are shown in Fig. 1. The DSC-curves of MBS1 and MBS2 are shown in Fig. 3 and Fig. 4.

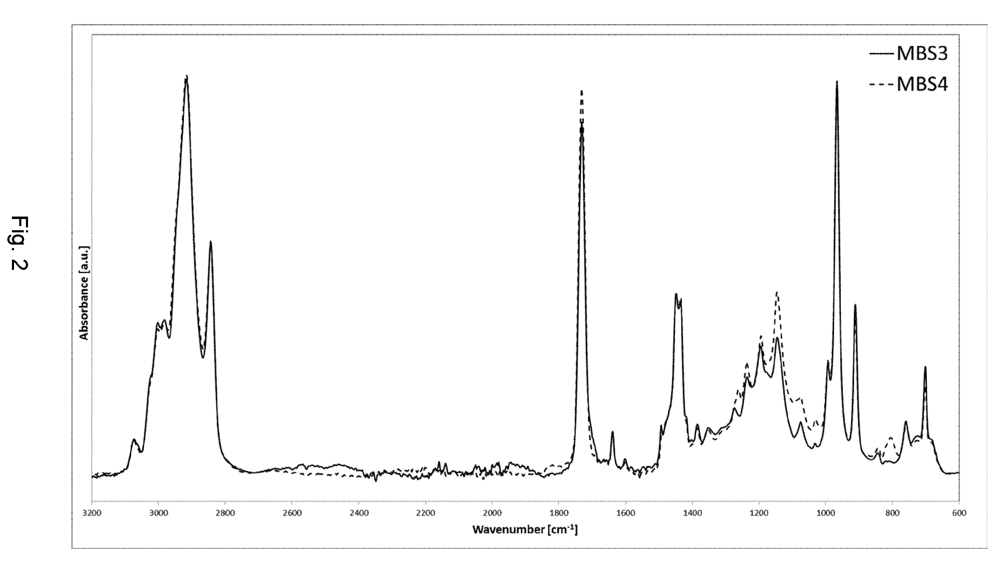

MBS3 and MBS4 are core shell impact modifiers of the MBS-type, available under the trade name KaneAce M511 and M732. The ATR-FTIR spectra of these impact modifiers are shown in Fig. 2. The DSC-curves of MBS3 and MBS4 are shown in Fig. 3 and Fig. 4.

AA1 and AA2 are core shell impact modifiers that are not of the MBS-type but are based on acrylic core-shell rubber particles. These impact modifiers are available under the trade name KaneAce M410 and Durastrenght 480.

R1, R2, R3 and R4 are different ethylene copolymers that are herein used as impact modifiers and that are available under the trade names Lotader AX8900, Elvaloy 4170, Elvaloy PTW and Surlyn 1706, respectively. Herein, R1, R2 and R3 are reactive ethylene copolymers and R4 is an ethylene ionomer.

ECO1, ECO2 and ECO3 are aliphatic and aliphatic-aromatic co-polyesters that are herein used as impact modifiers. These polymers are available under the trade names Ecoflex EA A1200, F C1200 and FS C2200, respectively.

CSRI is a core shell impact modifier that is not of the MBS-type that has a refractive index of about 1.57.

MBS1, MBS2, MBS3 and MBS4 were analyzed using DSC, ATR-FTIR and for their metals content using ICP.

In the DSC both MBS1 and MBS2 showed pronounced endotherm peaks of more than 0.2 J/g in the range between 0 and 40 °C.

From the ATR-FTIR spectra the maximum absorbance in the range of 951-981 cm⁻¹ (B) and the maximum absorbance in the range of 1716-1746 cm⁻¹ (M) were determined for MBS1, MBS2, MBS3 and MBS4. From this, the (B-M)/B ratio was calculated to be -0.04, -0.17, 0.07 and 0.01, respectively.

For MBS1, MBS2, MBS3 and MBS4 the concentration of trace metal elements was determined. The results are summarized in Table 1 below.

**Table 1**

| IM | Ba /ppm | Ca /ppm | Fe /ppm | K /ppm | Mg /ppm | Na /ppm | P /ppm | Zn /ppm | total metals /ppm |
|---|---|---|---|---|---|---|---|---|---|
| MBS1 | 0.326 | 5.395 | 0.614 | 111.786 | 1.481 | 795.704 | 7.904 | 2.154 | 917 |
| MBS2 | 0.325 | 7.233 | 0.727 | 72.925 | 1.630 | 777.737 | 11.970 | 3.063 | 864 |
| MBS3 | - | 7.207 | - | 24.852 | - | 504.983 | 3.592 | 6.013 | 543 |
| MBS4 | - | 424.288 | - | - | - | - | 416.161 | 1.514 | 436 |

### Experimental Set A:

Compounding of the polyester composition:
Polyester compositions were prepared by compounding on a 10 to 30 g extrusion scale using a Haake mini CTW extruder. The respective starting PEF was milled in powder form, vacuum dried at 150 °C overnight and subsequently stored in moisture free atmosphere. The impact modifiers were provided in powder form and were dry blended into the polyester composition and the resulting powder mixture was stored in moisture free atmosphere prior to the extrusion. The mini CTW extruder was operated in direct extrusion mode (no recirculation) at 260 °C at 60 rpm. Feeding was done manually, keeping torque fluctuation at a minimum and residence time was estimated to be 1-2 min. Resulting strands of the compounded material were cryogenically ground and stored in moisture free atmosphere for > 48 hours before further processing.

### Molding of the specimen:

Specimen of the polyester compositions were prepared by compression molding. For this, a Carver hot press was used for compression molding of small impact bars (50x6x4 mm³, both notched and unnotched). The powder of the material to be molded (as prepared above) was kept in the moisture free atmosphere till the very last moment, before being weighted (about 4.5 g for the impact bars) and transferred into the cavity of the mold. The mold, sandwiched between two aluminium plates covered with heat resistant plastic film (kapton), was quickly transferred in the hot press (250 °C, 3 min, 7 ton load). After that, the mold sandwich was quickly cooled between 2 aluminium plates cooled by tap water. After cooling to room temperature, the specimen were demolded.

The compositions of the polyester formulations under study are summarized in Table 2, wherein Ex12, Ex13, Ex14 and Ex15 are polyester compositions according to the present invention.

The results obtained for the polyester compositions under study are summarized in Table 3. It can be seen that overall the best absolute impact strength and the highest relative increase for the charpy unnotched impact strength can consistently be obtained for the polyester compositions of the present invention, while other impact modifiers, in particular other core shell impact modifiers, show a less favourable or even unfavourable influence on the impact strength of the polyester compositions. From the samples under study, only the polyester compositions of the present invention yield good improvements of both charpy unnotched and charpy notched impact strength.

### Experimental Set B:

Compounding of the polyester composition:
Polyester compositions were prepared by compounding on a 2 kg extrusion scale. The respective starting PEF was cryogenically milled in powder form and vacuum dried at 150 °C overnight before being allowed to cool in a sealed glass jar to limit moisture pickup. The impact modifiers were provided in powder form and were dry blended into the polyester composition before being fed to the extruder (Collins ZSK 12 mm 40D with atmospheric venting). Extrusion temperature was set to 250 °C, residence time was estimated to be 40 s and pelletization was conducted via strand cutting.

### Molding of the specimen:

Specimen of the polyester compositions were prepared as tensile bars ISO 527 - type 1A by injection molding. From the tensile bars, impact bars (80x10x4 mm³) were obtained by cutting the central part. For this, the polyester compositions prepared above were crystallized in a convection oven for 4 h at 150 °C. The pellets were singularized after crystallization (due to the pellets sticking together when amorphous) and vacuum dried at 150 °C overnight, before being transferred hot in the hopper of the injection molding machine. A Boy injection molding machine (260 °C, 7-8 min residence time) was used for the injection molding. The V-notches on the ISO179 impact bars were machined using a notching device (CEAST or Zwick).

The compositions of the polyester compositions under study are summarized in Table 4, wherein Ex19, Ex20, Ex21, Ex22, Ex23, Ex24 and Ex25 are polyester compositions according to the present invention.

The results obtained on the polyester compositions under study are summarized in Table 5. From the obtained data it can be seen, that the largest increase in Charpy unnotched impact strength is consistently observed when MBS-type core shell impact modifiers are used as defined for the polyester compositions of the present invention, wherein the polyester compositions of the present invention also exhibit excellent Charpy notched impact strength.

Furthermore, it can be seen that high molecular weights can be obtained for the polyester compositions of the present invention.

Likewise, it was found that the best impact properties were obtained, if the MBS-type impact modifiers are combined with a second impact modifier selected from the group of reactive ethylene copolymers, as seen for Ex24.

It was a surprisingly found, that the polyester compositions Ex19 and Ex20 showed severe coloration during the crystallization step that was employed in experimental set B. The obtained resin exhibited a distinct yellow colour and would not have been suitable for applications in that the customer expects a colourless product. Coloration during crystallization could be prevented by using MBS3 and MBS4 that exhibited a different B-M/B ratio, different amounts of metals and a different DSC behaviour as discussed above.

Furthermore, polyester compositions comprising PET were analysed for comparison. The compositions of the PET polyester compositions are summarized in Table 6. The results obtained for the PET polyester compositions are summarized in Table 7. The comparison of the data indicates, that the increase of impact strength caused by MBS-type impact modifiers is even more pronounced for polyester compositions comprising a polyester comprising alkylene 2,5-furandicarboxylate units compared to PET based polyester compositions, further emphasizing the specific compatibility of polyesters comprising alkylene 2,5-furandicarboxylate units with core shell impact modifiers, having a core comprising a butadiene-styrene copolymer and a shell comprising a methyl methacrylate based polymer or copolymer.

From Ex54 and the comparison of the Y transmissions for the other samples it can be seen that improved optical properties, in particular an increased transparency, can be obtained if impact modifiers are used that have a refractive index of about 1.57.

### Experimental Set C:

Compounding of the polyester composition:
Polyester compositions were again prepared by compounding on a 2 to 25 kg extrusion scale. The respective starting PEF was cryogenically milled in powder form and vacuum dried at 150 °C overnight before being allowed to cool in a sealed glass jar to limit moisture pickup. The impact modifiers were provided in powder form and were dry blended into the polyester composition before being fed to the extruder (Collins ZSK 25 mm 24D with atmospheric venting). Extrusion temperature was set to 250 °C, residence time was estimated to be 40 s and pelletization was conducted via strand cutting.

### Molding of the specimen:

Specimen of the polyester compositions were prepared as tensile bars ISO 527 - type 1A by injection molding. From the tensile bars, impact bars (80x10x4 mm³) were obtained by cutting the central part. For this, the polyester compositions prepared above were crystallized in a convection oven for 4 h at 150 °C. The pellets were singularized after crystallization (due to the pellets sticking together when amorphous) and vacuum dried at 150 °C overnight before being transferred hot in the hopper of the injection molding machine. An Arburg 370S machine (270 °C, 3 min residence time) was used for the injection molding. The V-notches on the ISO179 impact bars were machined using a notching device (Zwick).

The composition of the polyester formulations under study are summarized in Table 8 wherein Ex39 to Ex53 are polyester compositions according to the present invention. Herein, Ex52 and Ex53 include different slip agents as additional additives.

The results obtained on the polyester compositions under study are summarized in Table 9. The results show, that excellent impact properties can be obtained for the polyester compositions of the present invention over a broad compositional range.

**Table 2**

| Values in wt% with respect to the weight of the polyester composition | | | | | | | | | | | | | | | |
|---|---|---|---|---|---|---|---|---|---|---|---|---|---|---|---|
| Material | Ex1 | Ex2 | Ex3 | Ex4 | Ex5 | Ex6 | Ex7 | Ex8 | Ex9 | Ex10 | Ex11 | Ex12 | Ex13 | Ex14 | Ex15 |
| PEF3 | 100 | | 90 | 90 | 90 | 90 | 90 | 90 | 90 | 90 | | | | | |
| PEF5 | | 100 | | | | | | | | | 90 | 90 | 87 | 90 | 90 |
| R1 | | | 10 | | | | | | | | | | | | |
| R2 | | | | 10 | | | | | | | | | | | |
| R3 | | | | | 10 | | | | | | | | | | |
| R4 | | | | | | 10 | | | | | | | | | |
| ECO1 | | | | | | | 10 | | | | | | | | |
| ECO2 | | | | | | | | 10 | | | | | | | |
| ECO3 | | | | | | | | | 10 | | | | | | |
| AA1 | | | | | | | | | | 10 | | | | | |
| AA2 | | | | | | | | | | | 10 | | | | |
| MBS1 | | | | | | | | | | | | 10 | 13 | | |
| MBS3 | | | | | | | | | | | | | | 10 | |
| MBS4 | | | | | | | | | | | | | | | 10 |

**Table 3**

| Parameter | Ex1 | Ex2 | Ex3 | Ex4 | Ex5 | Ex6 | Ex7 | Ex8 | Ex9 | Ex10 | Ex11 | Ex12 | Ex13 | Ex14 | Ex15 |
|---|---|---|---|---|---|---|---|---|---|---|---|---|---|---|---|
| Charpy Unnotched Impact strength (_{kJ/}m²), (50x6x4 mm³) | 15.2 | 19.3 | 9.8 | 4.9 | 8.0 | 9.4 | 11.9 | 9.5 | 11.4 | 11.3 | 25.4 | 38.9 | 44.5 | 33.1 | 43.1 |
| Charpy Notched Impact Strength (kJ/m²), (50x6x4 mm³) | 2.1 | 3.1 | 4.7 | 6.9 | 6.4 | 1.9 | 2.2 | 2.6 | 2.5 | 4.5 | 6.4 | 4.8 | 6.2 | 5.8 | 6.2 |
| Relative increase in impact strength (unnotched) | - | - | 0.6 | 0.3 | 0.5 | 0.6 | 0.8 | 0.6 | 0.7 | 0.6 | 1.3 | 2.0 | 2.3 | 1.7 | 2.2 |
| Relative increase in impact strength (Notched) | | | 2.2 | 3.3 | 3.2 | 0.9 | 1.0 | 1.2 | 1.2 | 2.1 | 3.0 | 2.1 | 2.3 | 2.7 | 2.9 |

**Table 4**

| Values in wt% with respect to the weight of the polyester composition | | | | | | | | | | | | | | | | | |
|---|---|---|---|---|---|---|---|---|---|---|---|---|---|---|---|---|---|
| Material | Ex16 | Ex17 | Ex18 | Ex19 | Ex20 | Ex21 | Ex22 | Ex23 | Ex24 | Ex25 | Ex26 | Ex27 | Ex28 | Ex29 | Ex30 | Ex31 | Ex54 |
| PEF1 | | | 70 | 70 | 70 | 70 | 70 | 70 | 70 | 70 | 90 | 90 | 90 | 90 | 90 | 90 | 90 |
| PEF2 | | | 30 | 20 | 20 | 25 | 20 | 17 | 17 | 20 | | | | | | | 20 |
| PEF3 | 100 | | | | | | | | | | | | | | | | |
| PEF4 | | 100 | | | | | | | | | | | | | | | |
| MBS1 | | | | | 10 | | | | | | | | | | | | |
| MBS2 | | | | 10 | | | | | | | | | | | | | |
| MBS3 | | | | | | 5 | 10 | 13 | 10 | | | | | | | | |
| MBS4 | | | | | | | | | | 10 | | | | | | | |
| R1 | | | | | | | | | 3 | | | | 10 | | | | |
| R2 | | | | | | | | | | | 10 | | | | | | |
| R3 | | | | | | | | | | | | 10 | | | | | |
| ECO1 | | | | | | | | | | | | | | 10 | | | |
| ECO2 | | | | | | | | | | | | | | | 10 | | |
| ECO3 | | | | | | | | | | | | | | | | 10 | |
| CSRI | | | | | | | | | | | | | | | | | 10 |

**Table 5**

| Parameter | Ex16 | Ex17 | Ex18 | Ex19 | Ex20 | Ex21 | Ex22 | Ex23 | Ex24 | Ex25 | Ex26 | Ex27 | Ex28 | Ex29 | Ex30 | Ex31 | Ex54 |
|---|---|---|---|---|---|---|---|---|---|---|---|---|---|---|---|---|---|
| Charpy Unnotched Impact strength / (kJ/m²) ISO 179 1eU | 29.8 | 29.4 | 28.0 | - | - | 122.0 | 186.0 | 192.0 | 356.7 | 84.4 | 37 | 34 | 40.3 | 28.3 | 29.9 | 33.3 | 53.7 |
| Charpy notched Impact strength / (kJ/m²) ISO 179 1eA | 2.9 | 2.9 | 2.0 | 5.7 | 5.8 | 3.3 | 6.4 | 10.2 | 11.8 | 5.3 | 10 | 10 | 7.9 | 2.2 | 2.1 | 2.2 | 2.1 |
| Relative increase in impact strength (unnotched) | - | - | - | - | - | 4.3 | 6.6 | 6.8 | 12.6 | 3.0 | 1.3 | 1.2 | 1.4 | 1.0 | 1.1 | 1.2 | 1.9 |
| Relative increase in impact strength (notched) | - | - | - | 2.9 | 2.9 | 1.7 | 3.2 | 5.1 | 5.9 | 2.6 | 5.1 | 4.8 | 4.0 | 1.1 | 1.0 | 1.1 | 1.0 |
| Tensile Modulus (1 mm/min) / GPa | 3.7 | - | 3.8 | 3.2 | 3.1 | 3.3 | 2.9 | 2.6 | 2.5 | 2.9 | 2.8 | 2.8 | 2.9 | 3.4 | 3.5 | 3.2 | 3.2 |
| Tensile stress at yield (10 mm/min) / MPa | 94 | 95 | 95 | 95 | 68 | 67 | 75 | 63 | 54 | 55 | 66 | 67 | 68 | 88 | 88 | 83 | 75 |
| Extension at break (10 mm/min) / mm | >20 | >20 | 12 | 22 | 24 | 44 | 43 | 26 | 75 | 30 | 82 | 39 | 54 | 21 | 44 | 41 | 24 |
| Mw after compounding / (kg/mol) | - | - | 86 | 96 | 93 | 87 | 89 | 86 | 86 | 92 | 102 | 102 | 98 | 86 | 122 | 122 | 85 |
| Mw after molding / (kg/mol) | 114 | 110 | 84 | 68 | 69 | 74 | 76 | 75 | 76 | 86 | 96 | 94 | 95 | 76 | 96 | 94 | 66 |
| Y transmission (1 mm) | - | - | 79.2 | 34.2 | 35.2 | 50.1 | 42.0 | 42.6 | 36.4 | 44.7 | 27.9 | 25.4 | 29.7 | 58.4 | 67.7 | 51.7 | 81.0 |

**Table 6**

| Values in wt% with respect to the weight of the polyester composition | | | | | | |
|---|---|---|---|---|---|---|
| Material | Ex32 | Ex33 | Ex34 | Ex35 | Ex36 | Ex37 |
| PET1 | 100 | 87 | 87 | 90 | 90 | 90 |
| MBS3 | | 13 | 10 | | | |
| R1 | | | 3 | | | |
| R2 | | | | 10 | | |
| R3 | | | | | 10 | |
| ECO3 | | | | | | 10 |

**Table 7**

| Parameter | Ex32 | Ex33 | Ex34 | Ex35 | Ex36 | Ex37 |
|---|---|---|---|---|---|---|
| Charpy Unnotched Impact strength / (kJ/m²) ISO 179 1eU | - | - | - | - | - | 93.4 |
| Charpy notched Impact strength / (kJ/m²) | 4.8 | 14.6 | 24.2 | 8 | 7 | 3.4 |
| Relative increase in impact strength (unnotched) ISO 179 1eA | - | - | - | - | - | - |
| Relative increase in impact strength (notched) | - | 3.0 | 5.0 | 1.6 | 1.5 | 0.7 |
| Tensile Modulus (1 mm/min) / GPa | 2.4 | 1.8 | 1.6 | 1.8 | 1.7 | 2.2 |
| Tensile stress at yield (10 mm/min) / MPa | 58 | 36 | 35 | 36 | 36 | 53 |
| Extension at break (10 mm/min) / mm | >50 | 100 | 100 | 100 | 100 | 1000 |
| Mw after compounding / (kg/mol) | - | 64 | 65 | 78 | 72 | 98 |
| Mw after molding / (kg/mol) | - | 44 | 47 | 47 | 49 | 95 |

**Table 8**

| Values in wt% with respect to the weight of the polyester composition | | | | | | | | | | | | | | | | |
|---|---|---|---|---|---|---|---|---|---|---|---|---|---|---|---|---|
| Material | Ex38 | Ex39 | Ex40 | Ex41 | Ex42 | Ex43 | Ex44 | Ex45 | Ex46 | Ex47 | Ex48 | Ex49 | Ex50 | Ex51 | Ex52 | Ex53 |
| PEF1 | 100 | 84.0 | 80.0 | 80.0 | 84.0 | 88.0 | 88.0 | 80.0 | 80.0 | 80.0 | 83.1 | 88.0 | 83.1 | 82.0 | 81.7 | 81.7 |
| MBS3 | - | 8.0 | 12.0 | 16.0 | 8.0 | 8.0 | 8.0 | 16.0 | 16.0 | 12.0 | 11.1 | 8.0 | 11.1 | 12.0 | 12.0 | 12.0 |
| R1 | - | 8.0 | 8.0 | 4.0 | 8.0 | 4.0 | 4.0 | 4.0 | 4.0 | 8.0 | 5.8 | 4.0 | 5.8 | 6.0 | 6.0 | 6.0 |
| Slip agent (Incromax 100) | - | - | - | - | - | - | - | - | - | - | - | - | - | - | 0.3 | - |
| Slip agent (Crodamide 212) | - | - | - | - | - | - | - | - | - | - | - | - | - | - | - | 0.3 |

**Table 9**

| Parameter | Ex38 | Ex39 | Ex40 | Ex41 | Ex42 | Ex43 | Ex44 | Ex45 | Ex46 | Ex47 | Ex48 | Ex49 | Ex50 | Ex51 | Ex52 | Ex53 |
|---|---|---|---|---|---|---|---|---|---|---|---|---|---|---|---|---|
| Charpy notched Impact strength / (kJ/m²) ISO 179 1eA | 2.8* | 10.4 | 16.2 | 10.7 | 9.1 | 7.9 | 9.3 | 9.6 | 11.1 | 13.5 | 10.6 | 9.8 | 15.2 | 14.7 | 14.0 | 15.8 |
| Standard deviation of Charpy notched Impact strength / (kJ/m²) | 0.3 | 1.0 | 1.0 | 1.4 | 1.8 | 0.5 | 0.9 | 2.3 | 0.6 | 1.1 | 0.6 | 1.0 | 1.3 | 1.0 | 0.7 | 1.2 |
| Relative increase in impact strength (notched) | - | 3.7 | 5.8 | 3.8 | 3.3 | 2.8 | 3.3 | 3.4 | 4.0 | 4.8 | 3.8 | 3.5 | 5.4 | 5.3 | 5.0 | 5.6 |
| Tensile Modulus (1 mm/min) / MPa | 3.8 | 2.6 | 2.1 | 2.5 | 2.5 | 2.8 | 2.9 | 2.2 | 2.2 | 2.2 | 2.4 | 2.8 | 2.1 | 2.3 | 2.3 | 2.2 |
| Tensile stress at yield (50 mm/min) / MPa | 105.9 | 61.0 | 46.9 | 55.8 | 56.8 | 64.2 | 64.5 | 49.1 | 48.7 | 49.6 | 54.2 | 65.2 | 48.4 | 55.1 | 54.4 | 51.8 |
| Extension at break (50 mm/min) / mm | 4.7 | 21.0 | 23.0 | 16.6 | 12.3 | 18.4 | 14.2 | 18.4 | 21.9 | 18.7 | 17.5 | 21.4 | 19.9 | - | - | - |
| Mw after compounding / (kg/mol) | 110 | 109 | 81 | 91 | 99 | 98 | 89 | 81 | 88 | 77 | 87 | 94 | 90 | - | - | - |

| | | | | | | | | | | | | | | | | |
|---|---|---|---|---|---|---|---|---|---|---|---|---|---|---|---|---|
| *Average of two measurements | | | | | | | | | | | | | | | | |

## Claims

1. Polyester composition comprising,
a polyester comprising alkylene 2,5-furandicarboxylate units, and
a first impact modifier selected from the group consisting of core shell impact modifiers having a core comprising a butadiene-styrene copolymer and a shell comprising a methyl methacrylate based polymer or copolymer,
which polyester composition comprises of from 75 to 99 % by weight of the polyester comprising alkylene 2,5-furandicarboxylate units.

2. Polyester composition according to claim 1, wherein the first impact modifier has a (B-M)/B ratio of 0 or more, preferably in the range of 0 to 0.3, more preferably in the range of 0 to 0.2, most preferably in the range of 0 to 0.1, wherein B is the maximum absorbance in the range of 951-981 cm⁻¹ and M is the maximum absorbance in the range of 1716-1746 cm⁻¹ as measured by ATR-FTIR.

3. Polyester composition according to any one of claims 1 or 2, wherein the DSC curve of the first impact modifier is free of any endotherm peak of more than 0.2 J/g, preferably more than 0.4 J/g, most preferably more than 0.6 J/g, in the range between 0 and 40 °C.

4. Polyester composition according to any one of claims 1 to 3, wherein the first impact modifier comprises less than 800 ppm, preferably less than 600 ppm, by weight of metals with respect to the weight of the first impact modifier, calculated as the metal per se, wherein the at least one first impact modifier preferably comprises less than 0.5 ppm by weight of iron with respect to the weight of the first impact modifier, calculated as the metal per se.

5. Polyester composition according to any one of claims 1 to 4, wherein the polyester composition comprises a second impact modifier selected from the group consisting of reactive ethylene copolymers, preferably selected from the group consisting of ethylene-alkyl acrylate-glycidyl methacrylate terpolymers, preferably ethylene-methyl acrylate-glycidyl methacrylate terpolymers.

6. Polyester composition according to any one of claims 1 to 5, wherein the polyester comprises ethylene 2,5-furandicarboxylate units, wherein the polyester preferably is poly(ethylene 2,5-furandicarboxylate).

7. Process for producing a polyester composition according to any one of claims 1 to 6, which process comprises the steps:
a) providing or producing a starting polyester comprising alkylene 2,5-furandicarboxylate units, and
b) mixing the starting polyester with a first impact modifier selected from the group consisting of core shell impact modifiers, having a core comprising a butadiene-styrene copolymer and a shell comprising a methyl methacrylate based polymer or copolymer and compounding the obtained mixture in an extrusion device.

8. Process according to claim 7, wherein the ratio of the Charpy notched impact strength of the polyester composition divided by the Charpy notched impact strength of starting polyester is 1.5 or more, preferably 2 or more, more preferably 3 or more, most preferably 5 or more,
and/or wherein the ratio of the Charpy unnotched impact strength of the polyester composition divided by the Charpy unnotched impact strength of starting polyester is 3 or more, preferably 4 or more, more preferably 6 or more, most preferably 10 or more.

9. Article comprising polyester composition of any one of claims 1 to 6 wherein the article is preferably obtainable by injection molding or extrusion.

## Patentansprüche

1. Polyesterzusammensetzung, umfassend
einen Polyester, der Alkylen-2,5-furandicarboxylat-Einheiten umfasst, und
einen ersten Schlagzähigkeitsmodifikator, ausgewählt aus der Gruppe bestehend aus Kern-Schale-Schlagzähigkeitsmodifikatoren mit einem Kern, der ein Butadien-Styrol-Copolymer umfasst, und einer Schale, die ein Polymer oder Copolymer auf Basis von Methylmethacrylat umfasst,
wobei die Polyesterzusammensetzung 75 bis 99 Gew.-% des Polyesters, der Alkylen-2,5-furandicarboxylat-Einheiten umfasst, umfasst.

2. Polyesterzusammensetzung nach Anspruch 1, wobei der erste Schlagzähigkeitsmodifikator ein (B-M)/B-Verhältnis von 0 oder mehr, vorzugsweise im Bereich von 0 bis 0,3, weiter bevorzugt im Bereich von 0 bis 0,2, ganz besonders bevorzugt im Bereich von 0 bis 0,1, aufweist, wobei B die maximale Extinktion im Bereich von 951-981 cm⁻¹ ist und M die maximale Extinktion im Bereich von 1716-1746 cm⁻¹ ist, wie durch ATR-FTIR gemessen.

3. Polyesterzusammensetzung nach Anspruch 1 oder 2, wobei die DSC-Kurve des ersten Schlagzähigkeitsmodifikators frei von einem endothermen Peak von mehr als 0,2 J/g, vorzugsweise mehr als 0,4 J/g, ganz besonders bevorzugt mehr als 0,6 J/g, im Bereich zwischen 0 und 40 °C ist.

4. Polyesterzusammensetzung nach einem der Ansprüche 1 bis 3, wobei der erste Schlagzähigkeitsmodifikator weniger als 800 Gew.-ppm, vorzugsweise weniger als 600 Gew.-ppm, Metalle, bezogen auf das Gewicht des ersten Schlagzähigkeitsmodifikators, berechnet als das Metall an sich, umfasst, wobei der mindestens eine erste Schlagzähigkeitsmodifikator vorzugsweise weniger als 0,5 Gew.-ppm Eisen, bezogen auf das Gewicht des ersten Schlagzähigkeitsmodifikators, berechnet als das Metall an sich, umfasst.

5. Polyesterzusammensetzung nach einem der Ansprüche 1 bis 4, wobei die Polyesterzusammensetzung einen zweiten Schlagzähigkeitsmodifikator umfasst, der aus der Gruppe bestehend aus reaktiven Ethylencopolymeren, vorzugsweise aus der Gruppe bestehend aus Ethylen-Alkylacrylat-Glycidylmethacrylat-Terpolymeren, vorzugsweise Ethylen-Methylacrylat-Glycidylmethacrylat-Terpolymeren, ausgewählt ist.

6. Polyesterzusammensetzung nach einem der Ansprüche 1 bis 5, wobei der Polyester Ethylen-2,5-furandicarboxylat-Einheiten umfasst, wobei es sich bei dem Polyester vorzugsweise um Poly(ethylen-2,5-furandicarboxylat) handelt.

7. Verfahren zur Herstellung einer Polyesterzusammensetzung nach einem der Ansprüche 1 bis 6, wobei das Verfahren folgende Schritte umfasst:
a) Bereitstellen oder Herstellen eines Ausgangspolyesters, der Alkylen-2,5-furandicarboxylat-Einheiten umfasst, und
b) Mischen des Ausgangspolyesters mit einem ersten Schlagzähigkeitsmodifikator, ausgewählt aus der Gruppe bestehend aus Kern-Schale-Schlagzähigkeitsmodifikatoren mit einem Kern, der ein Butadien-Styrol-Copolymer umfasst, und einer Schale, die ein Polymer oder Copolymer auf Basis von Methylmethacrylat umfasst, und Compoundieren der erhaltenen Mischung in einer Extrusionsvorrichtung.

8. Verfahren nach Anspruch 7, wobei das Verhältnis der Charpy-Schlagzähigkeit (gekerbt) der Polyesterzusammensetzung dividiert durch die Charpy-Schlagzähigkeit (gekerbt) des Ausgangspolyesters 1,5 oder mehr, vorzugsweise 2 oder mehr, weiter bevorzugt 3 oder mehr, ganz besonders bevorzugt 5 oder mehr, beträgt und/oder wobei das Verhältnis der Charpy-Schlagzähigkeit (ungekerbt) der Polyesterzusammensetzung dividiert durch die Charpy-Schlagzähigkeit (ungekerbt) des Ausgangspolyesters 3 oder mehr, vorzugsweise 4 oder mehr, weiter bevorzugt 6 oder mehr, ganz besonders bevorzugt 10 oder mehr, beträgt.

9. Gegenstand, umfassend eine Polyesterzusammensetzung nach einem der Ansprüche 1 bis 6, wobei der Gegenstand vorzugsweise durch Spritzgießen oder Extrusion erhältlich ist.

## Revendications

1. Composition de polyester comprenant,
un polyester comprenant des unités furane-2,5-dicarboxylate d'alkylène et
un premier modificateur de la résistance au choc choisi dans le groupe constitué par les modificateurs de la résistance au choc de type noyau-enveloppe ayant un noyau comprenant un copolymère de butadiène-styrène et une enveloppe comprenant un polymère ou copolymère à base de méthacrylate de méthyle, laquelle composition de polyester comprend de 75 à 99 % en poids du polyester comprenant des unités furane-2,5-dicarboxylate d'alkylène.

2. Composition de polyester selon la revendication 1, le premier modificateur de la résistance au choc ayant un rapport (B - M)/B supérieur ou égal à 0, de préférence dans la plage de 0 à 0,3, plus préférablement dans la plage de 0 à 0,2, le plus préférablement dans la plage de 0 à 0,1, B étant l'absorbance maximale dans la plage de 951 à 981 cm⁻¹ et M étant l'absorbance maximale dans la plage de 1716 à 1746 cm⁻¹ telles que mesurées par ATR-FTIR.

3. Composition de polyester selon l'une quelconque des revendications 1 ou 2, la courbe de DSC du premier modificateur de la résistance au choc étant dépourvue d'un quelconque pic endotherme supérieur à 0,2 J/g, de préférence supérieur à 0,4 J/g, le plus préférablement supérieur à 0,6 J/g, dans la plage comprise entre 0 et 40 °C.

4. Composition de polyester selon l'une quelconque des revendications 1 à 3, le premier modificateur de la résistance au choc comprenant moins de 800 ppm, de préférence moins de 600 ppm, en poids de métaux, en termes de métal proprement dit, par rapport au poids du premier modificateur de la résistance au choc, l'au moins un premier modificateur de la résistance au choc comprenant de préférence moins de 0,5 ppm en poids de fer, en termes de métal proprement dit, par rapport au poids du premier modificateur de la résistance au choc.

5. Composition de polyester selon l'une quelconque des revendications 1 à 4, la composition de polyester comprenant un second modificateur de la résistance au choc choisi dans le groupe constitué par les copolymères d'éthylène réactifs, de préférence choisi dans le groupe constitué par les terpolymères d'éthylène-acrylate d'alkyle-méthacrylate de glycidyle, de préférence les terpolymères d'éthylène-acrylate de méthyle-méthacrylate de glycidyle.

6. Composition de polyester selon l'une quelconque des revendications 1 à 5, le polyester comprenant des unités furane-2,5-dicarboxylate d'éthylène, le polyester étant de préférence le poly(furane-2,5-dicarboxylate d'éthylène).

7. Procédé de production d'une composition de polyester selon l'une quelconque des revendications 1 à 6, lequel procédé comprend les étapes :
a) mise à disposition ou production d'un polyester de départ comprenant des unités furane-2,5-dicarboxylate d'alkylène et
b) mélange du polyester de départ avec un premier modificateur de la résistance au choc choisi dans le groupe constitué par les modificateurs de la résistance au choc de type noyau-enveloppe, ayant un noyau comprenant un copolymère de butadiène-styrène et une enveloppe comprenant un polymère ou copolymère à base de méthacrylate de méthyle et compoundage du mélange obtenu dans un dispositif d'extrusion.

8. Procédé selon la revendication 7, le rapport de la résistance au choc sur éprouvette entaillée Charpy de la composition de polyester divisée par la résistance au choc sur éprouvette entaillée Charpy du polyester de départ étant supérieur ou égal à 1,5, de préférence supérieur ou égal à 2, plus préférablement supérieur ou égal à 3, le plus préférablement supérieur ou égal à 5,
et/ou le rapport de la résistance au choc sur éprouvette non entaillée Charpy de la composition de polyester divisée par la résistance au choc sur éprouvette non entaillée Charpy du polyester de départ étant supérieur ou égal à 3, de préférence supérieur ou égal à 4, plus préférablement supérieur ou égal à 6, le plus préférablement supérieur ou égal à 10.

9. Article comprenant la composition de polyester selon l'une quelconque des revendications 1 à 6, l'article pouvant de préférence être obtenu par moulage par injection ou extrusion.
